# EUROPEAN PATENT SPECIFICATION

(11) **EP 2 161 982 B1**
(45) Date of publication and mention of the grant of the patent: **25.07.2012**
(21) Application number: 08760107.6
(22) Date of filing: 27.05.2008
(51) Int. Cl.: A01G 1/06

(54) **METHOD AND MACHINE FOR GRAFTING VINE CUTTINGS AND ROOTSTOCK OF SIMILAR PLANT VARIETIES**
VERFAHREN UND MASCHINE ZUM OKULIEREN VON REBSTOCKSTECKLINGEN UND WURZELSTOCK ÄHNLICHER PFLANZENARTEN
PROCÉDÉ ET MACHINE POUR GREFFER DES BOUTURES DE VIGNE ET PORTE-GREFFE DE VARIÉTÉS DE PLANTE ANALOGUES

(30) Priority: 19.06.2007 IT PN20070043
(43) Date of publication of application: 17.03.2010
(73) Proprietor: Vivai Cooperativi Rauscedo, 33095 Rauscedo (PN) (IT)
(72) Inventor: D'ANDREA, Gianni, I-33095 Rauscedo (pn) (IT); FLOREANI, Massimo, I-33095 Rauscedo (pn) (IT); RONZANI, Giuseppe, I-33095 Rauscedo (pn) (IT)
(74) Representative: Gonella, Mario
(86) International application number: PCT/EP2008/056511
(87) International publication number: WO 2008/155199

(56) References cited:
- EP-A- 1 566 093
- FR-A- 1 012 851
- FR-A- 2 541 562
- GB-A- 1 313 540
- US-A- 2 219 654
- US-A- 5 524 386

## Description

The present invention refers to a method and a machine for grafting vine propagation material such as cuttings and scions, as well as rootstock of similar plant varieties.

The grafting exercise in viticulture is a practice that became necessary as a result of the devastating effects of the vine-pest, or phylloxera, that ravaged vineyards throughout Europe at the end of the nineteenth century. After a number of attempts done in a variety of manners, a definitive solution to the problem has in fact been found in the creation of double-member phylloxera-resistant individuals by having resort to the grafting technique, which calls for a bud or a scion (portion of a shoot) in a grass-like, half-ligneous or ligneous state inserted in a so-called rootstock that is either already planted, i.e. set in the ground, or still in the form of cutting, to thereby form the cutting-graft (or more commonly termed also graft-cutting) assembly, which, as allowed to produce roots, will originate the final grafted rootstock ready for being planted.

Up to the early years of the twentieth century, grafting used to be done in the way of field grafting, as cleft grafting in spring, annular (upright or reverse) T-bud grafting in summer, notch grafting in August; then, in the second decade of the twentieth century, bench ligneous grafting (cutting + scion in the ligneous state thereof), commonly referred to as English double-cleft or peg grafting, started to take ground as an established grafting technique. Later on, with the advent of grafting machines, there has been a sharp development towards such methods as groove-and-tongue fit or fit-in grafting and omega grafting; fit-in grafting has been largely used at nurseries up to the first half of the eighties, while omega grafting took over thereafter. Regardless of the kind of grafting and machine used, it is of paramount importance that interface, i.e. boundary zones of both the cutting and the scion are as large as possible and fit perfectly together.

It is in fact from these two boundary zones that there generates the cicatricial tissue enabling the two parts to join to each other and the phylloxera-resistant double-member plant to form. Depending on the variety of the rootstock and the scion, the kind of grafting used, the forcing conditions of the graft-cutting assemblies, and the cultivation conditions in open field, different yields can be achieved, wherein a 60-percent yield, i.e. obtaining sixty marketable rooted vine-rootstocks from hundred planted graft-cutting assemblies, may be considered as a satisfactory yield on an average; a 75-percent yield would then be considered a good yield and a 90-percent yield a very good one.

The kind of grafting used has been found to greatly affect the yield and the physiologic equilibrium of the future vineyard, which may sometimes degenerate into real pathological forms due to formation of quite abnormal hyperplasias.

As compared with fit-in grafting, omega grafting has been found to usually originate less regular cicatrization calluses (and, therefore, lower yields) or even hyperdeveloped and fasciate calluses, under most serious problems arising as far as translocation of both crude and mature, i.e. elaborate sap is concerned. In contrast thereto, the omega grafting method has succeeded in gaining widespread acceptance owing to the far greater productivity it ensures as compared with the fit-in grafting method (i.e. 500 grafts/hour/person for the omega grafting methods versus 125 grafts/hour/person for the groove-and-tongue fit grafting method).

A grafting machine (1- or 2-stroke omega machine) is used for the omega method, while a machine, as usually referred to as "celerina" in the local technical parlance, is used for groove-and-tongue fit grafting, which works by providing "groove-and-tongue" cuts by means of two distinct cutting mills at the distal end of the cutting and the basal end of the scion, respectively. As compared with the omega machine, the "celerina" machine is less efficient, less safe, and more prone to wear-out.

Various attempts have then been made in view of providing semi-automatic machines.

In this connection, the French patent publication FR 2 541 562 describes a machine of this kind, which comprises a plurality of carriages moving along on a chain conveyor and provided with moving grippers used to hold the rootstock cuttings and the scions in an overlapping position in which they lie above each other. Cutting the appropriate ends of the cuttings and the scions is performed by means of a single, duly shaped knife that, while performing a single stroke in a direction running orthogonally to the axis of the elements to be grafted , both heels and cuts the ends to be joined with each other. The machine shall then axially align the cutting and the scion with each other for grafting to be able to be completed correctly. Finally, the grafted stock must be unloaded. This practically enables a generally omega-shaped graft to be obtained, along with a major drawback in that the boundary zones in contact with the grafted parts have an extension that is far from being the optimum one. Furthermore, an additional drawback lies in that the machine is such as to take up a lot of space, since the various working stations thereof are aligned in series with each other.

Described in EP 1 566 093 is a fully automated grafting machine, which is provided with devices to individually measure and select the graft-carrying cuttings and the scions, wherein such cuttings and scions are picked up from respective containers and are moved along on belt and vibration, i.e. shaker conveyors. This solution, however, appears to be quite complex from a construction point of view and is also quite likely to expose the parts to be grafted to damages, given the difficulty in having them handled with the due sensitivity and gentleness.

It is therefore a main purpose of the present invention to provide a method and a machine for grafting propagation materials of grapevines and similar plant varieties in a semi-automatic manner, wherein both such method and such machine are fully capable of ensuring that, on the one side, the elements or parts to be grafted are handled in a manner that is most suited to, consistent with and respectful of the nature thereof, while allowing for a very high productivity of the whole process so as to make the grafting operation as economically advantageous as possible.

A further purpose of the present invention is to provide a kind of graft, the geometry, i.e. shape of which is such as to offer the largest possible exchange or boundary surface of the interface zones between the parts being grafted, so as to obtain an optimum effect as far as the resulting cicatrization is concerned.

Yet another purpose of the present invention is to provide a machine that is both simple and compact, and is further capable of being operated in as safe as possible manner by an operator.

According to the present invention, these aims, along with further ones that will become apparent from the following disclosure, are reached in a grafting machine that incorporates the features and characteristics as defined and recited in the appended claims.

Advantages and features of the present invention will anyway be more readily understood from the description that is given below by way of non-limiting example with reference to the accompanying drawings, in which:
- Figure 1 is a schematic plan view of a machine according to the present invention;
- Figure 2 is a schematic view of a detail of the machine shown in Figure 1, as viewed in the grafting operating position thereof;
- Figure 3 is a schematic side view of another detail of the machine illustrated in Figure 1;
- Figure 4 is a schematic elevational view of the rear side of the machine illustrated in Figure 1;
- Figure 5 is a partial view of another detail of the machine illustrated in Figure 1;
- Figure 6 is a view of two elements to be grafted after a processing step performed with the machine shown in Figure 1;
- Figure 7 is a view of the elements shown in Figure 6, as viewed after them having been grafted by the machine according to the present invention.

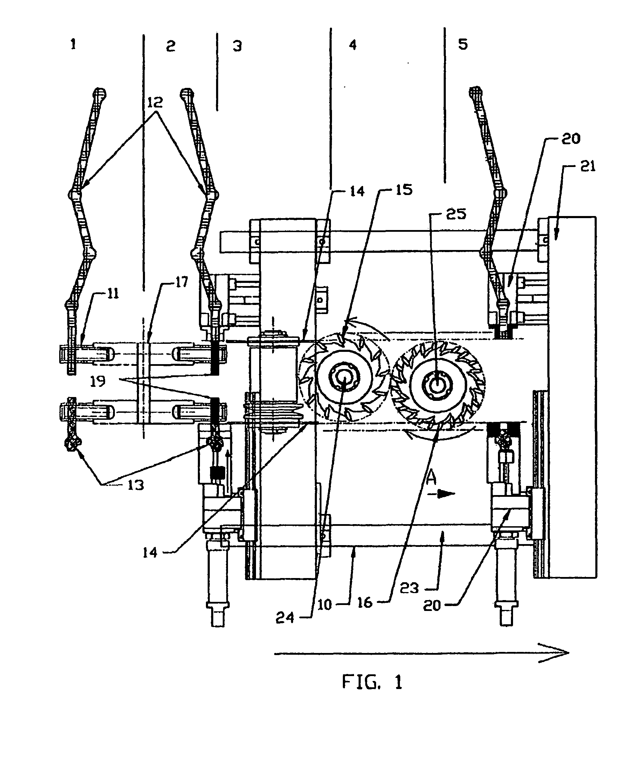

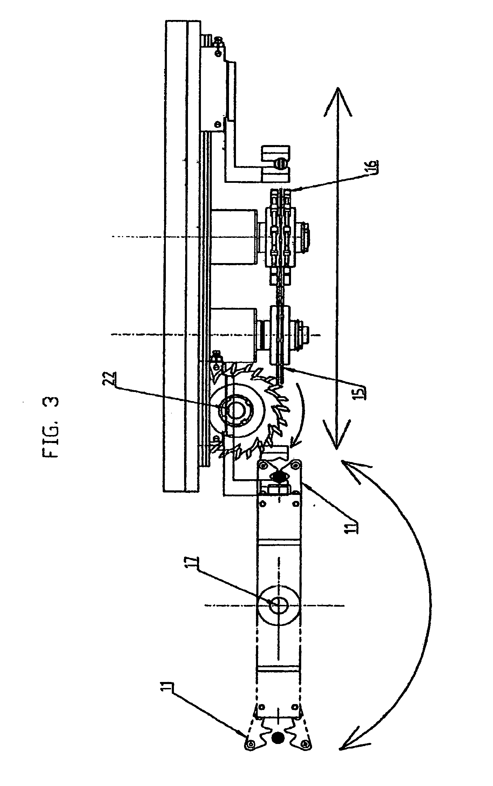

With particular reference to Figures 1 and 3, a machine according to the present invention for grafting grapevine cuttings and scions is substantially comprised of a support framework or chassis 10, on which there can be identified following function zones: loading position 1, pick-up position 2, heeling or seating position 3, milling position 4 for cutting out the groove-and-tongue joint, and grafting position 5.

Schematically represented in the plan view of Figure 1 there are - in a sequence from the left to the right - following operating members of the machine:
(i) a pair of grippers 11 for loading and picking up the cuttings 12, on the one side, and the scions 13 on the other side; (ii) the cutting mills 14 for heeling both the cuttings 12 and the scions 13; (iii) the cutting mill 15 provided to cut out the cuttings and the cutting mill 16 provided to cut out the scions.

The shaft 17 is a motor-driven one and drives the grippers 11 to rotate by an angle of 180° so as to bring a cutting 12 and a scion 13 - having their axes aligned with and opposing each other, respectively - from the loading position 18 to the pick-up position 19 for heeling (as represented in the schematical side view of Figure 3).

In the pick-up position 19, the cutting and the scion are then transferred by the grippers 11 to respective clamps 20 attached to a slide 21 mounted on the chassis 10 and adapted to be driven so as to slide on a horizontal plane. Similarly to the grippers 11, the cramps 20 are so shaped and configured as to be able to grip and hold both cuttings and scions in a most appropriate manner. In the pick-up position 19, the cutting mills 14 are driven to rotate about a horizontal shaft 22 (Figure 3) to perform and complete heeling of both the cutting 12 and the scion 13 concurrently, while the stumps being removed are cleared away.

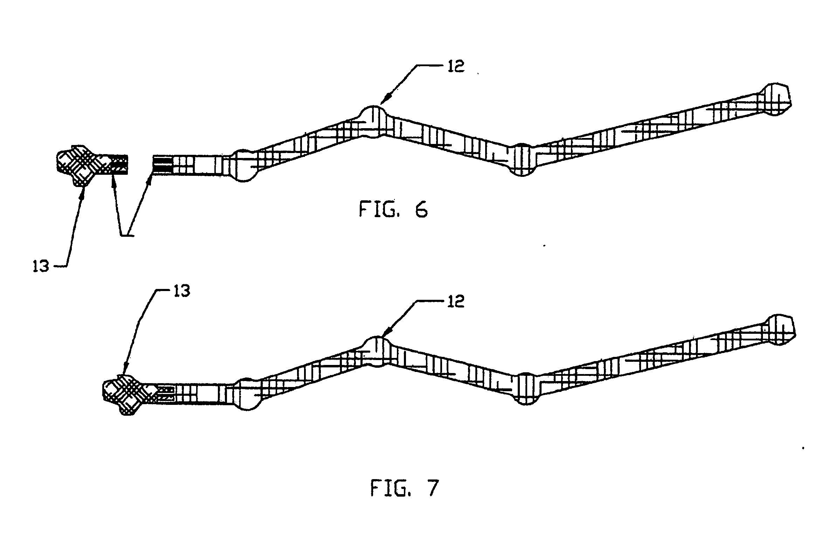

In the next working step of the machine, the slide 21 is driven - e.g. by an electric motor (not shown) - to slide along runners 23 and, while in this way moving to the right in Figures 1 and 3, carries the cutting 12 and the scion 13 into the working area of the cutting mills 15 and 16 that are in turn driven to rotate about respective vertical shafts 24 and 25. The cutting mill 15 provided for the cuttings comprises two wheels lying above each other (Figure 3) so as to be able to cut out two axial carvings in the cutting 12, as this is best shown in Figure 8. In turn, the cutting mill 16 provided for the scions comprises three wheels lying above each other (Figure 3) so as to be able to cut out three axial carvings in the scion 12, as this is again best shown in Figure 6. This particular geometry of the carvings cut out in the elements to be grafted is such as to provide the largest possible live contact surface between the same elements, so as to increase the likelihood for the grafting operation to prove successful.

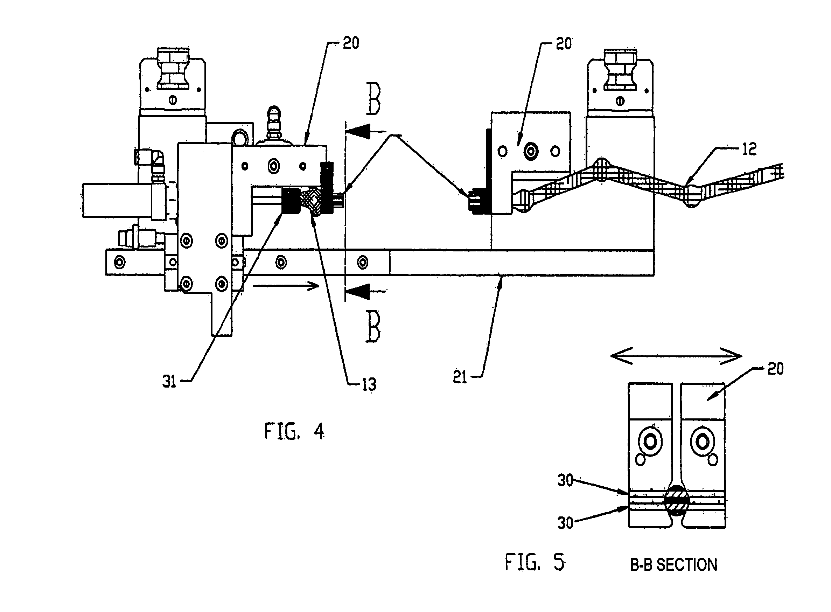

It should further be specially noticed that the clamps 20 are provided with respective horizontal grooves 30 (Figure 5), through which the cutting mills 16 and 16, which are provided in a co-planar arrangement with the same grooves, are therefore able to pass in view of cutting out the carvings in the elements to be grafted. This particular feature practically enables the carving operation to be carried out as the elements to be grafted are firmly held by the clamps 20, thereby reducing the risk for the same elements to suffer damages to a minimum.

The relative position of the cutting mills 15 and 16 may of course be appropriately adjusted, in particular as far as the cutting depth of the mills is concerned in view of providing the desired carvings.

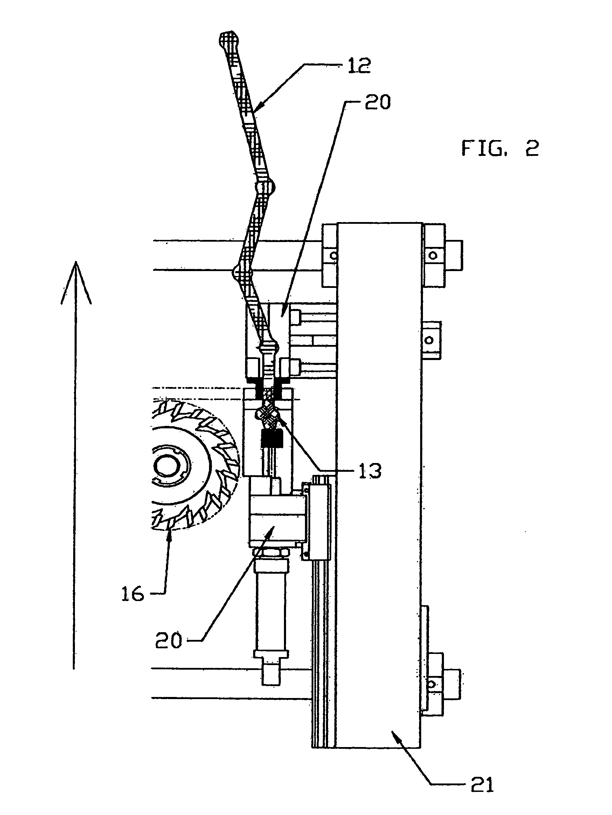

The slide 21 then keeps sliding onwards to thereby clear the milling station and reach the station at which actual grafting occurs. Figure 4 is an elevational schematic rear view of the machine looking directly onto the grafting station thereof. In this station, the clamps 20 are driven to slide horizontally on the slide 21 in a direction extending orthogonally to the direction of displacement of the same slide 21, so as to move closer to each other. The displacement of the clamps 20 on the slide 21 is controlled so as to most accurately graft the respective milled ends of the cutting 12 and the scion 13 with each other, as this is best shown in Figures 2 and 7. The embodiment described above with reference to Figures 1 and 2 represents a simplified solution, in which the clamp 20 holding the cutting is stationary, while it is the clamp 20 holding the scion that moves to complete grafting.

Fully apparent is anyway the ability of the inventive machine, as it has been described above, to readily reach the afore-indicated simplicity, reliability and operating safety aims, as well as meet the afore-specified structural-compactness and high-productivity requirements.

## Claims

1. Method for grafting propagation materials of grapevines and similar plant varieties, comprising a manual loading step, in which the elements to be grafted are loaded manually, a heeling step and a milling step in which the elements to be grafted are cut, a grafting step in which the cut elements are inserted into seach other, and a step in which the thus completed graft is unloaded, **characterized in that** the loading step and the heeling step are carried out in two mutually opposing and axially aligned stations, whereas the milling step is carried out in a sequence by having the elements to be grafted (12, 13) displaced with the help of moving means capable of moving on a horizontal plane.

2. Method according to claim 1, **characterized in that** the elements to be grafted (12, 13) are conveyed from the loading step to the heeling step rotate by having them rotated by an angle of 180° about a horizontal axis.

3. Method according to claim 1, **characterized in that** the elements to be grafted (12, 13) are transferred from the heeling step to the milling step for engraving and, thereafter, to the grafting step by having them displaced rectilinearly in a first direction, and are then grafted by having them displaced rectilinearly in a second direction running orthogonally to said first direction.

4. Machine for grafting propagation materials of grapevines and similar plant varieties, comprising loading means and pick-up means for gripping and holding the elements to be grafted, heeling means and milling means to heel and cut the elements to be grafted, grafting means to graft the thus cut elements together, and unloading means to unload the thus completed grafts, **characterized in that** the loading means consist of grippers (11) provided with contoured grooves, and the pick-up means consist of clamps (20) that are in turn provided with contoured grooves (30), and the milling means consist of cutting mills (15, 16) situated in an appropriate position to perform cutting by passing through the grooves (30) of said clamps.

5. Machine according to claim 4, **characterized in that** the loading means are comprised of a pair of grippers (11) adapted to rotate through an angle of 180° about a horizontal axis (17).

6. Machine according to claim 4, **characterized in that** the pick-up means are comprised of a pair of clamps (20) mounted on a slide (21) adapted to slidably displace on a horizontal plane, said clamps being slidable on said slide in an orthogonal direction relative to the displacement direction of the slide.

7. Machine according to claim 4, **characterized in that** the heeling or seating means are comprised of a pair of cutting mills (14) adapted to rotate about a horizontal axis (22).

8. Machine according to claim 4, **characterized in that** the milling means are comprised of a plurality of cutting mills (15, 16) adapted to rotate about respective vertical axes (24, 25).

## Patentansprüche

1. Verfahren zum Pfropfen von Vermehrungsgut von Weinstöcken und ähnliche Pflanzenarten, das einen Schritt des manuellen Einlegens, in dem die zu pfropfenden Elemente manuell eingelegt werden, einen Aufsetzschritt und einen Einschneidschritt, in dem die zu pfropfenden Elemente geschnitten werden, einen Pfropfschritt, in dem die geschnittenen Elemente ineinander eingeführt werden, und einen Schritt umfasst, in dem die so fertig gestellte Pfropfpflanze ausgegeben wird, **dadurch gekennzeichnet, dass** der Einlegeschritt und der Aufsetzschritt in zwei einander gegenüberliegenden und axial fluchtenden Stationen ausgeführt werden, während der Einschneidschritt in einer Abfolge ausgeführt wird, bei der die zu pfropfenden Elemente (12, 13) mit Hilfe von Bewegungseinrichtungen verschoben werden, die in der Lage sind, sich in einer horizontale Ebene zu bewegen.

2. Verfahren nach Anspruch 1, **dadurch gekennzeichnet, dass** die zu pfropfenden Elemente (12, 13) von dem Einlegeschritt zu dem Aufsetzschritt transportiert werden, indem sie um einen Winkel von 180° um eine horizontale Achse herum gedreht werden.

3. Verfahren nach Anspruch 1, **dadurch gekennzeichnet, dass** die zu pfropfenden Elemente (12, 13) von dem Aufsetzschritt zu dem Einschneidschritt zum Einkerben und anschließend zu dem Pfropfschritt überführt werden, indem sie geradlinig in einer ersten Richtung verschoben werden, und dann gepfropft werden, indem sie geradlinig in einer zweiten Richtung verschoben werden, die rechtwinklig zu der ersten Richtung verläuft.

4. Maschine zum Pfropfen von Vermehrungsgut von Weinstöcken und ähnlithen Pflanzenarten, die eine Einlegeeinrichtung und eine Aufnehmeinrichtung zum Ergreifen und Halten der zu pfropfenden Elemente, eine Aufsetzeinrichtung und eine Einschneideinrichtung zum Aufsetzen und Schneiden der zu pfropfenden Elemente, eine Pfropfeinrichtung zum Pfropfen der so geschnittenen Elemente miteinander sowie eine Ausgabeeinrichtung zum Ausgeben der so fertig gestellten Pfropfpflanzen umfasst, **dadurch gekennzeichnet, dass** die Einlegeeinrichtung aus Greifern (11) besteht, die mit geformten Nuten versehen sind, und die Aufnehmeinrichtung aus Klemmen (20) besteht, die ebenfalls mit geformten Nuten (30) versehen sind, und die Einschneideinrichtung aus Einschneidmessern (15, 16) besteht, die sich an einer entsprechenden Position befinden, um Schneiden durchzuführen, indem sie durch die Nuten (30) der Klemmen hindurchtreten.

5. Maschine nach Anspruch 4, **dadurch gekennzeichnet, dass** die Einlegeeinrichtung aus einem Paar Greifer (11) besteht, die so eingerichtet sind, dass sie sich um einen Winkel von 180° und um eine horizontale Achse (17) herum drehen.

6. Maschine nach Anspruch 4, **dadurch gekennzeichnet, dass** die Aufnehmeinrichtung aus einem Paar Klemmen (20) besteht, die an einem Schlitten (21) angebracht sind, der so eingerichtet ist, dass er in einer horizontalen Ebene gleitend verschoben wird, wobei die Klemmen an dem Schlitten in einer Richtung im rechten Winkel relativ zu der Verschieberichtung des Schlittens verschoben werden können.

7. Maschine nach Anspruch 4, **dadurch gekennzeichnet, dass** die Aufsetz- bzw. Auflegeeinrichtung aus einem Paar Einschneidmesser (14) besteht, die so eingerichtet sind, dass sie sich um eine horizontale Achse (22) herum drehen.

8. Maschine nach Anspruch 4, **dadurch gekennzeichnet, dass** die Einschneideinrichtung aus einem Paar Einschneidmesser (15, 16) besteht, die so eingerichtet sind, dass sie sich um jeweilige vertikale Achsen (24, 25) herum drehen.

## Revendications

1. Procédé pour greffer des matériaux de multiplication de vignes et de variétés de plantes similaires, comprenant une étape de chargement manuel, dans laquelle les éléments à greffer sont chargés manuellement, une étape de formation de talon et une étape de fraisage dans lesquelles les éléments à greffer sont coupés, une étape de greffage dans laquelle les éléments coupés sont insérés l'un dans l'autre, et une étape dans laquelle la greffe ainsi achevée est déchargée, **caractérisé en ce que** l'étape de chargement et l'étape de formation de talon sont réalisées dans deux stations mutuellement opposées et alignées axialement, alors que l'étape de fraisage est réalisée successivement par un déplacement des éléments à greffer (12, 13) à l'aide de moyens de déplacement aptes à se déplacer dans un plan horizontal.

2. Procédé selon la revendication 1, **caractérisé en ce que** les éléments à greffer (12, 13) sont convoyés depuis l'étape de chargement vers l'étape de formation de talon en subissant une rotation d'un angle de 180° autour d'un axe horizontal.

3. Procédé selon la revendication 1, **caractérisé en ce que** les éléments à greffer (12, 13) sont transférés depuis l'étape de formation de talon vers l'étape de fraisage pour gravure et, par la suite, à l'étape de greffage en étant déplacés de manière rectiligne dans une première direction, et sont alors greffés en étant déplacés de manière rectiligne dans une seconde direction s'étendant perpendiculairement à ladite première direction.

4. Machine pour greffer des matériaux de multiplication de vignes et de variétés de plantes similaires, comprenant des moyens de chargement et des moyens de ramassage pour saisir et maintenir les éléments à greffer, des moyens de formation de talon et des moyens de fraisage pour former un talon et couper les éléments à greffer, des moyens de greffage pour greffer ensemble les éléments ainsi coupés, et des moyens de déchargement pour décharger les greffes ainsi achevées, **caractérisée en ce que** les moyens de chargement consistent en des pinces (11) équipées de rainures profilées, et les moyens de ramassage consistent en des mâchoires (20) qui sont aussi équipées de rainures profilées (30), et les moyens de fraisage consistent en des fraises de coupe (15, 16) situées dans une position appropriée pour réaliser la coupe en passant à travers les rainures (30) desdites mâchoires.

5. Machine selon la revendication 4, **caractérisée en ce que** les moyens de chargement comprennent une paire de pinces (11) adaptées pour tourner d'un angle de 180° autour d'un axe horizontal (17).

6. Machine selon la revendication 4, **caractérisée en ce que** les moyens de ramassage comprennent une paire de mâchoires (20) montées sur une glissière (21) apte à se déplacer en coulissant sur un plan horizontal, lesdites mâchoires pouvant coulisser sur ladite glissière dans une direction orthogonale par rapport à la direction de déplacement de la glissière.

7. Machine selon la revendication 4, **caractérisée en ce que** les moyens de formation de talon ou d'assise comprennent une paire de fraises de coupe (14) aptes à tourner autour d'un axe horizontal (22),

8. Machine selon la revendication 4, **caractérisée en ce que** les moyens de fraisage comprennent une pluralité de fraises de coupe (15, 16) aptes à tourner autour d'axes verticaux respectifs (24, 25).
